# FASCICULE DE BREVET EUROPEEN

(11) **EP 2 379 345 B1**
(45) Date de publication et mention de la délivrance du brevet: **09.01.2013**
(21) Numéro de dépôt: 09747870.5
(22) Date de dépôt: 10.11.2009
(51) Int. Cl.: B60C 9/07, B60C 9/08

(54) **PNEUMATIQUE COMPORTANT DES CÂBLES D'ARMATURE DE CARCASSE PRÉSENTANT UNE FAIBLE PERMÉABILITÉ, ET DES FILS TEXTILES ASSOCIÉS A L'ARMATURE DE CARCASSE**
KARKASSENVERSTÄRKUNGSKORDS MIT GERINGER DURCHLÄSSIGKEIT UND DER KARKASSENVERSTÄRKUNG ZUGEORDNETE TEXTILFÄDEN UMFASSENDER REIFEN
TYRE COMPRISING CARCASS REINFORCING CORDS OF LOW PERMEABILITY AND TEXTILE THREADS ASSOCIATED WITH THE CARCASS REINFORCEMENT

(30) Priorité: 22.12.2008 FR 0858895
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: COGNE, Michael, F-63200 Riom (FR); JAULT, Bernard, F-63510 Aulnat (FR); NADREAU, Laurent, F-63270 Vic Le Comte (FR)
(74) Mandataire: Le Cam, Stéphane Georges Elie
(86) Numéro de dépôt international: PCT/EP2009/064922
(87) Numéro de publication internationale: WO 2010/072463

(56) Documents cités:
- EP-A- 1 602 780
- FR-A- 2 536 017
- FR-A- 2 795 751
- FR-A- 2 873 721

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.
Des pneumatiques connus sont décrits dans les documents FR-A-2536017, FR-A-2873721, EP-A-1602780 et FR-A-2795751.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter voire éliminer le passages des agents oxydants par les canaux formés au sein des câbles. Des pneumatiques ainsi réalisés ont mis en évidence, des problèmes d'apparition de poche d'air lors de la fabrication du pneumatique.

En effet, les différentes étapes de fabrication conduisent à la formation de poches d'air occlus. Dans le cas de pneumatiques comportant une armature de carcasse formée de câbles dont la structure forme des canaux pouvant conduire l'air, ces poches d'air disparaissent du fait de la diffusion de l'air dans les matériaux notamment au travers desdits canaux existant au sein des câbles. Dans le cas de pneumatiques comportant une armature de carcasse formée de câbles dont la structure est fortement pénétrée par le caoutchouc, ces poches d'air subsistent à l'issue des étapes de fabrication. Il apparaît uniquement un déplacement de ces poches d'air durant l'étape de cuisson du pneumatique, celles étant déplacées vers des zones où s'exercent une faible pression. Le déplacement de l'air se fait le long de l'armature de carcasse suivant des passages existant entre les éléments de renforcement, les couches de mélange caoutchouteux couvrant les éléments de renforcement formant des zones de renfoncement parallèles aux éléments de renforcement avant l'étape de cuisson du pneumatique. Ces zones de renfoncement autorisent ainsi l'air à se déplacer légèrement en fonction de la pression qui s'exerce sur les régions où se trouvent les poches d'air. La pression ou les variations de pression interviennent notamment lors de l'étape de cuisson du pneumatique ou bien durant l'étape de conformation si celle-ci existe.

L'apparition de ces poches d'air est le plus souvent rédhibitoire selon leur localisation et peuvent nécessiter la mise au rebus des pneumatiques, celles-ci pouvant devenir des zones de fragilité du pneumatique. Les coûts de fabrication deviennent alors inacceptables du simple fait des mauvais rendements en production.

Les inventeurs se sont ainsi donnés pour mission de fournir des pneumatiques pour véhicules lourds de type "Poids-Lourds", dont les performances d'usure sont conservées pour des usages routiers et dont les performances notamment d'endurance sont améliorées notamment au regard des phénomènes de "fatigue-corrosion" ou de "fatigue-fretting-corrosion", quelles que soient les conditions de roulage notamment en termes de gonflage et dont le coût de fabrication reste acceptable.

Ce but a été atteint selon l'invention par un pneumatique à armature de carcasse radiale, constituée d'au moins une couche d'éléments de renforcement métalliques, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles non frettés présentant au test dit de perméabilité un débit inférieur à 20 cm³/mn, au moins une couche de l'armature de carcasse étant pourvue sur au moins une face de fils textiles orientés principalement selon une direction parallèle à celle des éléments de renforcement métalliques de ladite au moins une couche de l'armature de carcasse et lesdits fils textiles étant ondulés autour de cette direction principale.

Les fils textiles sont avantageusement des fils qui ne confèrent aucune ou quasiment aucune propriété mécanique au pneumatique, tels que des fils de coton. Les fils textiles présentent avantageusement des propriétés drainantes de l'air. En outre, l'augmentation de la masse globale du pneumatique du fait de la présence de ces fils textiles est tout à fait négligeable.

Avantageusement encore, les directions principales des fils textiles sont parallèles entre elles et les ondulations des fils textiles sont en phase les unes avec les autres.

Les fils textiles sont avantageusement mis en place sur la surface axialement extérieure dans les flancs de l'armature de carcasse. Dans le cas d'un pneumatique comportant des tringles autour desquelles l'armature de carcasse forme un retournement, les fils textiles sont avantageusement mis en place sur la surface qui vient au contact de la tringle. Ce positionnement est particulièrement avantageux pour assurer une évacuation complète des poches d'air qui se forment lors de la fabrication du pneumatique, celles-ci apparaissant essentiellement sur la surface axialement et/ou radialement extérieure de l'armature de carcasse lors de la fabrication.

Des fils textiles peuvent encore être mis en place sur les deux faces d'une couche d'armature de carcasse.

Dans le cas d'une armature de carcasse comportant plusieurs couches d'éléments de renforcement, chacune desdites couches peut comporter des fils textiles sur au moins une face.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention conduit à des améliorations en termes de compromis endurance et coûts de fabrication très intéressants. En effet, les propriétés d'endurance avec un tel pneumatique sont au moins aussi bonnes qu'avec les meilleures solutions évoquées ci-dessus. Les câbles de l'armature de carcasse présentant au test dit de perméabilité un débit inférieur à 20 cm³/mn permettent de limiter les risques liés à la corrosion. En outre, la présence des fils textiles ondulés associés à au moins une couche de l'armature de carcasse permettent de drainer l'air occlus lors de la fabrication du pneumatique et donc conduit à une productivité supérieure à celle évoquée précédemment et donc à des coûts plus intéressants. Les inventeurs ont su mettre en évidence que l'ondulation des fils textiles permet d'optimiser, notamment par rapport à des fils rectilignes, la probabilité pour l'air occlus de rencontrer un « drain » soit dès la formation d'une poche d'air, soit lors d'un déplacement de ladite poche d'air selon une direction parallèle aux éléments de renforcement de la couche d'armature de carcasse durant les étapes de fabrication du pneumatique comme il l'a été évoqué précédemment. Les essais réalisés ont confirmé que les résultats obtenus avec des fils textiles rectilignes sont sans commune mesure avec ceux obtenus avec des fils textiles ondulés conformément à l'invention. En effet, des fils textiles rectilignes sensiblement parallèles aux éléments de renforcement de l'armature de carcasse permettent de faire disparaître une partie des poches d'air occlus mais dans beaucoup de cas, les poches d'air subsistant sont suffisantes pour nécessiter une mise au rebus du pneumatique alors que les fils textiles ondulés ont permis de conserver la quasi-totalité des pneumatiques ainsi fabriqués et donc ramener le coût unitaire de fabrication à des valeurs acceptables.

Les inventeurs ont encore su mettre en évidence que l'efficacité des fils textiles pour évacuer l'air occlus lors de la fabrication du pneumatique réside notamment dans le fait que ces fils sont posés nus, c'est-à-dire non enrobés d'un mélange polymérique tel que du caoutchouc, et qu'ils peuvent ainsi capter l'air et/ou l'humidité sur toute leur longueur pour ensuite le et/ou la drainer. En effet, des fils ou bien des tissus textiles enrobés de caoutchouc ou bien une nappe de caoutchouc comportant des fils textiles ou un tissu textile n'auraient absolument pas le même effet, seules les extrémités des fils textiles pouvant être au contact des poches d'air occlus. La présence d'une poche d'air sur une zone d'un fil textile enrobé de caoutchouc ne pourrait pas être drainée. De façon à ne pas conserver de poches d'air occlus après la fabrication du pneumatique, le drainage de ces poches d'air doit pouvoir s'effectuer très rapidement, notamment durant l'étape de vulcanisation. Des fils textiles enrobés de caoutchouc ne peuvent pas assurer une telle fonction, la présence d'une matière polymérique freinant la diffusion de l'air et/ou de l'humidité.

Par contre, après vulcanisation, les fils textiles selon l'invention sont alors noyés dans la masse caoutchouteuse du pneumatique. Ils conservent une efficacité pour le drainage de traces d'air et/ou d'humidité pouvant provenir par exemple de lésions accidentelles en surface du pneumatique ou bien de l'air sous pression au sein de la cavité. Les quantités à drainer sont alors beaucoup plus faibles et le drainage s'effectue sur des durées beaucoup plus longues, ces traces d'air et/ou d'humidité apparaissant lentement par des phénomènes de diffusion au travers des masses caoutchouteuses.

Selon un mode de réalisation préféré de l'invention, le rapport du pas entre deux fils textiles sur l'amplitude d'ondulation est compris entre 0.5 et 1. Un tel rapport permet d'optimiser la zone occupée par les fils textiles sur la couche d'armature de carcasse selon la direction perpendiculaire à la direction principale de pose desdits fils et donc perpendiculaire à la direction des éléments de renforcement de la couche d'armature de carcasse. Une telle occupation de ladite zone permet d'assurer le drainage de l'air sur la totalité de la surface de la couche d'armature de carcasse.

Le pas entre deux fils textiles est mesuré selon une direction perpendiculaire à la direction principale desdits fils textiles et donc perpendiculaire à la direction des éléments de renforcement de ladite au moins une couche de l'armature de carcasse.

De préférence également, le rapport du pas entre deux fils textiles sur le pas entre les éléments de renforcement de ladite au moins une couche de l'armature de carcasse est supérieur à 10. De même que précédemment l'augmentation du nombre de fils textiles par rapport au nombre d'éléments de renforcement de la couche d'armature de carcasse permet d'assurer un meilleur drainage pour un coût modéré. La pose des fils textiles ayant un coût le nombre de fils posés doit rester limité.

Le pas entre les éléments de renforcement de ladite au moins une couche de l'armature de carcasse est mesuré selon une direction perpendiculaire à la direction desdits éléments de renforcement de ladite au moins une couche de l'armature de carcasse.

De préférence encore, le rapport de la période d'ondulation sur l'amplitude d'ondulation est compris entre 5 et 20. Un tel rapport conduit à une ondulation des fils textiles qui va notamment permettre d'éviter les risques de casse des fils textiles durant les différentes phases de fabrication du pneumatique du fait des contraintes imposées. La valeur de 20 garantit un drainage satisfaisant, des périodes trop importantes pouvant conduire à un risque de ne pas présenter de drain (fil textile) dans une zone ou l'air occlus est présent ou même se déplace.

Avantageusement selon l'invention, les éléments de renforcement de ladite au moins une couche de l'armature de carcasse sont répartis avec un pas constant. Avantageusement encore, le pas entre les fils textiles est constant et l'amplitude et la période d'ondulation sont constantes.

Selon un mode de réalisation avantageux de l'invention, les éléments de renforcement métalliques d'au moins une couche de l'armature de carcasse sont des câbles à au moins deux couches, au moins une couche interne étant gainée d'une couche constituée d'une composition polymérique telle qu'une composition de caoutchouc réticulable ou réticulée, de préférence à base d'au moins un élastomère diénique.

Selon un mode de réalisation préféré de l'invention, les câbles de l'armature de carcasse présentent au test dit de perméabilité un débit inférieur à 10 cm³/mn et de préférence encore inférieur à 2 cm³/mn.

L'invention propose encore un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles non frettés à au moins deux couches, au moins une couche interne étant gainée d'une couche constituée d'une composition polymérique telle qu'une composition de caoutchouc réticulable ou réticulée, de préférence à base d'au moins un élastomère diénique et au moins une couche de l'armature de carcasse étant pourvue sur au moins une face de fils textiles orientés principalement selon une direction parallèle à celle des éléments de renforcement métalliques de ladite au moins une couche de l'armature de carcasse et lesdits fils textiles étant ondulés autour de cette direction principale.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans le câble de l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, la présente invention est en premier lieu mise en oeuvre avec des élastomères diéniques essentiellement insaturés, en particulier du type (a) ou (b) ci-dessus.

Ainsi, l'élastomère diénique est préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

De préférence encore selon l'invention, l'élastomère diénique choisi est majoritairement (c'est-à-dire pour plus de 50 pce) constitué d'un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Selon un mode avantageux de l'invention, l'élastomère diénique choisi est exclusivement (c'est-à-dire pour 100 pce) constitué de caoutchouc naturel, de polyisoprène de synthèse ou d'un mélange de ces élastomères, le polyisoprène de synthèse ayant un taux (% molaire) de liaisons cis-1,4 de préférence supérieur à 90%, plus préférentiellement encore supérieur à 98%.

On pourrait aussi utiliser, selon un mode de réalisation particulier de l'invention, des coupages (mélanges) de ce caoutchouc naturel et/ou ces polyisoprènes de synthèse avec d'autres élastomères diéniques fortement insaturés, notamment avec des élastomères SBR ou BR tels que précités.

La gaine de caoutchouc du câble de l'invention peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques, ces polymères autres qu'élastomères étant alors présents à titre de polymère minoritaire.

Bien que la composition de caoutchouc de ladite gaine soit préférentiellement dépourvue de tout plastomère et qu'elle ne comporte qu'un élastomère (ou mélange d'élastomères) diénique(s) comme base polymérique, ladite composition pourrait aussi comprendre au moins un plastomère selon une fraction massique xₚ inférieure à la fraction massique xₑ du(des) élastomère(s). Dans un tel cas, on a de préférence la relation suivante: 0 < xₚ < 0,5. xₑ, et plus préférentiellement: 0 < xₚ < 0,1. xₑ.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

De préférence, ladite composition est à base de caoutchouc naturel et elle comprend du noir de carbone à titre de charge renforçante, par exemple un noir de carbone de grade (ASTM) 300, 600 ou 700 (par exemple N326, N330, N347, N375, N683, N772).

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

Dans la construction L+M+N selon l'invention, la couche intermédiaire C2 comporte de préférence six ou sept fils, et le câble conforme à l'invention présente alors les caractéristiques préférentielles suivantes (d₁, d₂, d₃, p₂ et p₃ en mm) :
- (i) 0,10 < d₁ < 0,28 ;
- (ii) 0,10 < d₂ <d₂ 0,25 ;
- (iii) 0,10 < d₃ < 0,25 ;
- (iv) M = 6 ou M = 7;
- (v) 5 π (d₁ + d₂) < p₂ ≤ p₃ < 5 π (d₁ + 2d₂ + d₃) ;
- (vi) les fils desdites couches C2, C3 sont enroulés dans le même sens de torsion (S/S ou Z/Z).

De préférence, la caractéristique (v) est telle que p₂ = p₃, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, le câble de l'invention est un câble à couches de construction notée 1+M+N, c'est-à-dire que sa couche interne C1 est constituée d'un seul fil.

Avantageusement encore, les rapports (d₁/d₂) sont de préférence fixés dans des limites données, selon le nombre M (6 ou 7) de fils de la couche C2, comme suit :
pour M = 6 : 0,9 < (d₁/d₂) < 1,3;
pour M = 7 : 1,3 < (d₁ / d₂) < 1,6 .

Une valeur trop faible du rapport d₁ / d₂ peut être préjudiciable à l'usure entre la couche interne et les fils de la couche C2. Une valeur trop élevée peut quant à elle nuire à la compacité du câble, pour un niveau de résistance en définitive peu modifié, ainsi qu'à sa flexibilité ; la rigidité accrue de la couche interne C1 due à un diamètre d₁ trop élevé pourrait être par ailleurs préjudiciable à la faisabilité elle-même du câble, lors des opérations de câblage.

Les fils des couches C2 et C3 peuvent avoir un diamètre identique ou différent d'une couche à l'autre. On utilise de préférence des fils de même diamètre (d₂=d₃), notamment pour simplifier le procédé de câblage et abaisser les coûts.

Le nombre maximal Nₘₐₓ de fils enroulables en une couche unique saturée C3 autour de la couche C2 est bien entendu fonction de nombreux paramètres (diamètre d₁ de la couche interne, nombre M et diamètre d₂ des fils de la couche C2, diamètre d₃ des fils de la couche C3).

L'invention est de préférence mise en oeuvre avec un câble choisi parmi les câbles de structure 1+6+10, 1+6+11, 1+6+12, 1+7+11, 1+7+12 ou 1+7+13.

Pour un meilleur compromis entre résistance, faisabilité et tenue en flexion du câble, d'une part, et pénétrabilité par le caoutchouc, d'autre part, on préfère que les diamètres des fils des couches C2 et C3, identiques ou non, soient compris entre 0,12 mm et 0,22 mm.

Dans un tel cas, on a plus préférentiellement les relations suivantes qui sont vérifiées :
0,14 < d₁ < 0,22;
0,12 < d₂ ≤ d₃ < 0,20;
5 < p₂ ≤ p₃ < 12 (pas en mm réduits) ou bien 20 < p₂ ≤ p₃ < 30 (pas en mm élevés).

Un diamètre inférieur à 0,19 mm permet de réduire le niveau des contraintes subies par les fils lors des variations importantes de courbure des câbles, alors qu'on choisit de préférence des diamètres supérieurs à 0,16 mm pour des raisons notamment de résistance des fils et de coût industriel.

Un mode de réalisation avantageux consiste par exemple à choisir p₂ et p₃ compris entre 8 et 12 mm, avantageusement avec des câbles de structure 1+6+12.

De préférence, la gaine de caoutchouc présente une épaisseur moyenne allant de 0,010 mm à 0,040 mm.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 5 qui représentent :
- figure1, une vue méridienne d'un schéma d'un pneumatique selon un mode de réalisation de l'invention,
- figure2, une représentation schématique semi-écorchée d'une couche d'armature de carcasse du pneumatique de la figure 1,
- figure 3, une représentation schématique d'une vue en coupe d'un câble d'armature de carcasse du pneumatique de la figure 1,
- figure 4, une représentation schématique d'une vue en coupe d'un premier autre exemple de câble d'armature de carcasse selon l'invention,
- figure 5, une représentation schématique d'une vue en coupe d'un deuxième autre exemple de câble d'armature de carcasse selon l'invention.

Les figures ne sont pas représentées à l'échelle pour en simplifier la compréhension.

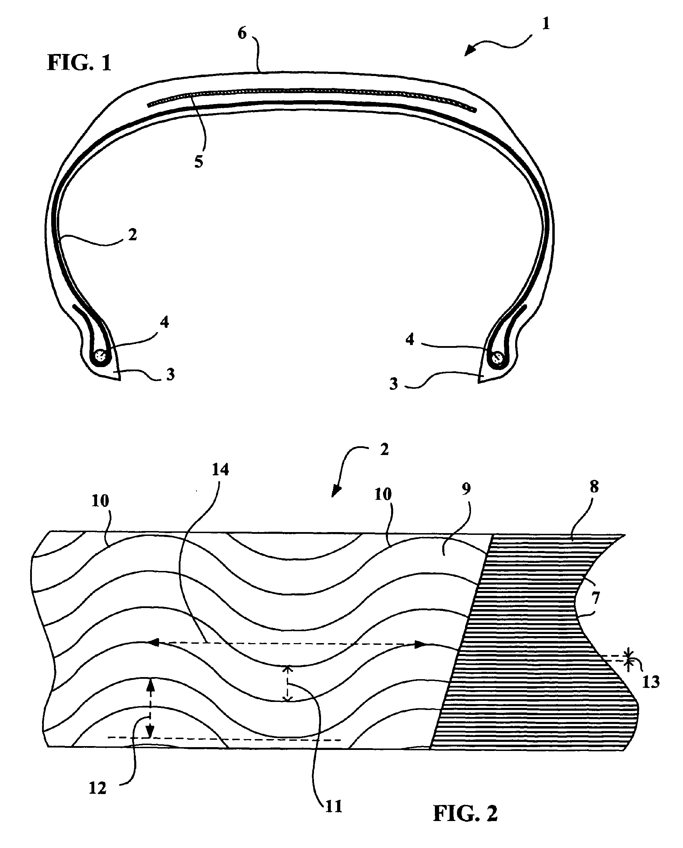

Sur la figure 1, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. L'armature de sommet 5 est formée radialement de l'intérieur à l'extérieur :
- d'une première couche de travail formée de câbles métalliques inextensibles 11.35 non frettés, continus sur toute la largeur de la nappe, orientés d'un angle égal à 18°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formées de câbles métalliques élastiques 6x35.

L'ensemble de ces couches constituant l'armature de sommet 5 n'est pas représenté en détail sur les figures.

La figure 2 illustre une représentation semi-écorchée d'une couche d'armature de carcasse 2 selon l'invention. Celle-ci est constituée de câbles métalliques 7 orientés parallèlement les uns par rapport aux autres et maintenus entre deux couches 8, 9 de mélange caoutchouteux, dites de calandrage. Sur la surface « extérieure » (surface qui n'est pas au contact des câbles métalliques) de la couche de calandrage 9 sont mis en place des fils de coton 10 qui présentent une ondulation autour d'un axe principal ou moyen orienté parallèlement à la direction des câbles métalliques 7. Conformément à l'invention, le rapport du pas 11 entre deux fils de coton 10 sur l'amplitude d'ondulation 12 est égal à 0.63 et donc compris entre 0.5 et 1.

Le rapport du pas 11 entre deux fils de coton 10 sur le pas 13 entre les câbles métalliques 7 de la couche de l'armature de carcasse 2 est égal à 11 et donc supérieur à 10.

Le rapport de la période d'ondulation 14 sur l'amplitude d'ondulation 12 des fils de coton 10 est égal à 5.4 et donc compris entre 5 et 20.

Les fils de coton 10 sont mis en place sur la surface de la couche d'armature de carcasse 2 qui vient au contact de la tringle 4.

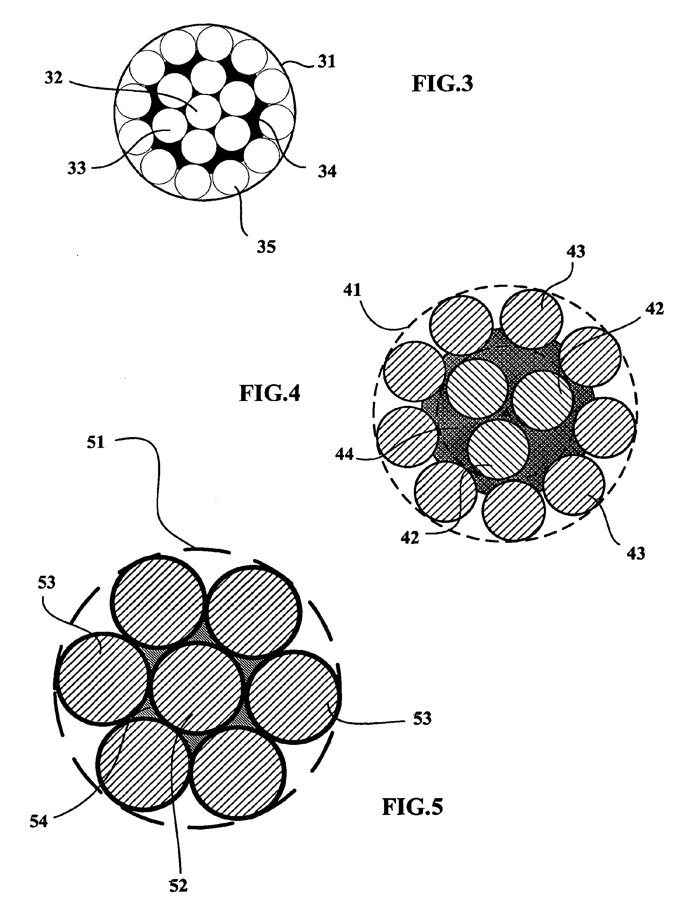

La figure 3 illustre une représentation schématique de la section d'un câble 31 d'armature de carcasse du pneumatique 1 de la figure 1. Ce câble 31 est un câble à couche de structure 1+6+12, non fretté, constitué d'un noyau central formée d'un fil 32, d'une couche intermédiaire formée de six fils 33 et d'une couche externe formée de douze fils 35.

Il présente les caractéristiques suivantes (d et p en mm):
- structure 1+6+12 ;
- d₁ = 0.20 (mm);
- d₂ = 0.18 (mm);
- p₂ = 10 (mm)
- d₃ = 0.18 (mm);
- p₃ = 10 (mm),
- (d₂/ d₃) = 1 ;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 32 et de la couche intermédiaire formée des six fils 33 est gainé par une composition de caoutchouc 34 à base d'élastomère diénique non vulcanisé (à l'état cru). Le gainage est obtenu via une tête d'extrusion de l'âme constituée du fil 32 entouré des six fils 33, suivi d'une opération finale de retordage ou câblage des 12 fils 35 autour de l'âme ainsi gainé.

L'aptitude à la pénétration du câble 31, mesurée selon la méthode décrite précédemment, est égale à 95 %.

La composition élastomérique constituant la gaine de caoutchouc 24 est réalisée à partir d'une composition telle que décrite précédemment et présente dans le cas présent la même formulation, à base de caoutchouc naturel et de noir de carbone, que celle des couches de calandrage 13 de l'armature de carcasse que les câbles sont destinés à renforcer.

La figure 4 illustre une représentation schématique de la section d'un autre câble 41 d'armature de carcasse pouvant être utilisé dans un pneumatique selon l'invention. Ce câble 41 est un câble à couche de structure 3+9, non fretté, constitué d'une âme centrale formée d'un câble constitué de trois fils 42 retordus entre eux et d'une couche externe formée de neuf fils 43.

Il présente les caractéristiques suivantes (d et p en mm) :
- structure 3+9 ;
- d₁ = 0.18 (mm);
- p₁ = 5 (mm)
- (d₁/ d₂) = 1
- d₂ = 0.18 (mm);
- p₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 42 a été gainée par une composition de caoutchouc 44 à base d'élastomère diénique non vulcanisé (à l'état cru). Le gainage est obtenu via une tête d'extrusion du câble 42, suivi d'une opération finale de câblage des 9 fils 43 autour de l'âme ainsi gainée.

L'aptitude à la pénétration du câble 41, mesurée selon la méthode décrite précédemment, est égale à 95 %.

La figure 5 illustre une représentation schématique de la section d'un autre câble 51 d'armature de carcasse pouvant être utilisé dans un pneumatique selon l'invention. Ce câble 51 est un câble à couche de structure 1+6, non fretté, constitué d'un noyau central formé d'un fil 52 et d'une couche externe formée de six fils 53.

Il présente les caractéristiques suivantes (d et p en mm) :
- structure 1+6;
- d₁ = 0,200 (mm);
- (d₁/d₂) = 1,14;
- d₂ = 0,175 (mm);
- p₂ = 10 (mm),
avec d₁, le diamètre du noyau et d₂ et p₂, respectivement le diamètre et le pas d'hélice des fils de la couche externe.

Le noyau central constitué du fil 52 a été gainée par une composition de caoutchouc 54 à base d'élastomère diénique non vulcanisé (à l'état cru). Le gainage est obtenu via une tête d'extrusion du fil 52, suivi d'une opération finale de câblage des 6 fils 53 autour du noyau ainsi gainé.

L'aptitude à la pénétration du câble 41, mesurée selon la méthode décrite précédemment, est égale à 95 %.

Des essais ont été réalisés avec des pneumatiques réalisés selon l'invention conformément à la représentation des figures 1, 2 et 3, et d'autres avec des pneumatiques dits de référence.

Les pneumatiques de référence diffèrent des pneumatiques selon l'invention par des câbles 31 de l'armature de carcasse ne comportant pas la couche de gainage 34 et ne comportant pas de fils de coton sur la surface de la couche d'armature de carcasse.

Des essais d'endurance en roulage sur volant ont été réalisés sur une machine de tests imposant aux pneumatiques une charge de 4415 daN et une vitesse de 40 km/h, avec un gonflage des pneumatiques dopé en oxygène. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Les essais ainsi réalisés ont montré que les distances parcourues lors de chacun de ces tests sont favorables pour les pneumatiques selon l'invention qui totalisent 300000 km alors que les pneumatiques de référence n'ont parcourus que 250 000 km.

D'autres essais d'endurance en roulage sur essieu moteur de véhicule ont été réalisés en imposant aux pneumatiques une charge de 3680 daN et une vitesse de 40 km/h, avec un gonflage des pneumatiques de 0.2 bar. Les essais ont été réalisés pour les pneumatiques selon l'invention avec des conditions identiques à celles appliquées aux pneumatiques de référence. Les roulages sont menés sur une distance de 12 000 km ou sont arrêtés dès que les pneumatiques présentent des dégradations de l'armature de carcasse.

Les essais ainsi réalisés ont montré que les distances parcourues lors de chacun de ces tests avec les pneumatiques selon l'invention ont toujours permis d'atteindre les 12 000 km alors que les pneumatiques de référence n'ont parcourus au maximum que 10 000 km.

En outre, d'autres types de pneumatiques ont été fabriqués. Une première variante de pneumatiques diffère des pneumatiques selon l'invention par l'absence de fils de coton.

Dans ce premier cas, il s'avère qu'une grande majorité des pneumatiques présentent des défauts d'aspect sur les flancs du fait de la présence de poches d'air qui les rendent non commercialisables.

Une deuxième variante de pneumatiques diffère des pneumatiques selon l'invention uniquement par des fils de coton mis en place de manière non ondulée et parallèles aux câbles métalliques de la couche d'armature de carcasse.

Dans ce deuxième cas, il s'avère que les pneumatiques présentent moins de défauts mais une grande partie des pneumatiques fabriqués demeurent non commercialisables.

L'invention telle qu'elle vient d'être décrite notamment en référence aux exemples de réalisation ne doit pas être comprise comme étant limitée à ces exemples. Les fils textiles peuvent encore être présent sur l'une ou l'autre des faces d'une couche d'armature de carcasse ou bien encore sur les deux faces de la couche d'armature de carcasse. Dans le cas de plusieurs couches d'armature de carcasse, les fils textiles peuvent encore être présents sur une ou plusieurs couches et sur une ou deux faces de chacune des couches.

## Revendications

1. Pneumatique (1) à armature de carcasse radiale, constituée d'au moins une couche (2) d'éléments de renforcement métalliques (7), ledit pneumatique comprenant une armature de sommet (5), elle-même coiffée radialement d'une bande de roulement (6), ladite bande de roulement étant réunie à deux bourrelets (3) par l'intermédiaire de deux flancs, **caractérisé en ce que** les éléments de renforcement métalliques (7) d'au moins une couche de l'armature de carcasse sont des câbles non frettés présentant au test dit de perméabilité un débit inférieur à 20 cm³/mn, **en ce qu'**au moins une couche (2) de l'armature de carcasse est pourvue sur au moins une face de fils textiles (10) orientés principalement selon une direction parallèle à celle des éléments de renforcement métalliques (7) de ladite au moins une couche (2) de l'armature de carcasse et **en ce que** lesdits fils textiles sont ondulés autour de cette direction principale.

2. Pneumatique (1) selon la revendication 1, **caractérisé en ce que** les éléments de renforcement métalliques d'au moins une couche de l'armature de carcasse sont des câbles (31, 41, 51) à au moins deux couches et **en ce qu'**au moins une couche interne est gainée d'une couche (34, 44, 54) constituée d'une composition polymérique telle qu'une composition de caoutchouc réticulable ou réticulée, de préférence à base d'au moins un élastomère diénique.

3. Pneumatique (1) selon la revendication 1 ou 2, **caractérisé en ce que** les câbles présentent au test dit de perméabilité un débit inférieur à 10 cm³/mn et de préférence inférieur à 2 cm³/mn

4. Pneumatique (1) selon l'une des revendications 1 à 3, **caractérisé en ce que** le rapport du pas (11) entre deux fils textiles (10) sur l'amplitude d'ondulation (12) est compris entre 0.5 et 1.

5. Pneumatique (1) selon l'une des revendications 1 à 4, **caractérisé en ce que** le rapport du pas (11) entre deux fils textiles (10) sur le pas (13) entre les éléments de renforcement (7) de ladite au moins une couche (2) de l'armature de carcasse est supérieur à 10.

6. Pneumatique (1) selon l'une des revendications 1 à 5, **caractérisé en ce que** le rapport de la période d'ondulation (14) sur l'amplitude d'ondulation (12) est compris entre 5 et 20.

7. Pneumatique (1) selon l'une des revendications 1 à 6, **caractérisé en ce que** les éléments de renforcement métalliques d'au moins une couche de l'armature de carcasse sont des câbles métalliques (31, 41, 51) à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu**'une gaine (34, 44, 54) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

8. Pneumatique selon la revendication 7, **caractérisé en ce que** le diamètre des fils (32, 42, 52) de la première couche (C1) est compris entre 0.15 et 0.5 mm, et **en ce que** le diamètre des fils (33, 43, 53, 335) des couches (C2, C3) est compris entre 0.15 et 0.5 mm.

9. Pneumatique selon la revendication 7 ou 8, **caractérisé en ce que** le pas d'hélice d'enroulement desdits fils de la couche externe (C3) est compris entre 8 et 25 mm.

10. Pneumatique (1) selon l'une des revendications 2 à 9, **caractérisé en ce que** l'élastomère diénique est choisi dans le groupe constitué par les polybutadiènes, le caoutchouc naturel, les polyisoprènes de synthèse, les copolymères de butadiène, les copolymères d'isoprène, et les mélanges de ces élastomères.

11. Pneumatique selon l'une des revendications 2 à 10, **caractérisé en ce que** la composition de caoutchouc réticulable ou réticulée à base d'au moins un élastomère diénique présente à l'état réticulé un module sécant en extension inférieur à 20 MPa et de préférence, inférieur à 12 MPa.

12. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

13. Pneumatique (1) selon l'une des revendications précédentes, **caractérisé en ce que** l'armature de sommet (5) comporte encore au moins une couche d'éléments de renforcement circonférentiels.

14. Pneumatique selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

15. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Claims

1. Tyre (1) having a radial carcass reinforcement, consisting of at least one layer (2) of metal reinforcing elements (7), said tyre comprising a crown reinforcement (5), which is itself covered radially with a tread (6), said tread being joined to two beads (3) via two sidewalls, **characterized in that** the metal reinforcing elements (7) of at least one layer of the carcass reinforcement are non-hooped cords having, in the permeability test, a flow rate of less than 20 cm³/min, **in that** at least one layer (2) of the carcass reinforcement is provided on at least one side with textile threads (10) oriented mainly along a direction parallel to that of the metal reinforcing elements (7) of the said at least one carcass reinforcement layer (2) and **in that** said textile threads are corrugated about this main direction.

2. Tyre (1) according to Claim 1, **characterized in that** the metal reinforcing elements of at least one layer of the carcass reinforcement are cords (31, 41, 51) having at least two layers and **in that** at least an inner layer is sheathed with a layer (34, 44, 54) consisting of a polymer composition such as a crosslinkable or crosslinked rubber composition, preferably one based on at least one diene elastomer.

3. Tyre (1) according to Claim 1 or 2, **characterized in that** the cords have, in the permeability test, a flow rate of less than 10 cm³/min and preferably less than 2 cm³/min.

4. Tyre (1) according to one of Claims 1 to 3, **characterized in that** the ratio of the pitch (11) between textile threads (10) to the corrugation amplitude (12) is between 0.5 and 1.

5. Tyre (1) according to one of Claims 1 to 4, **characterized in that** the ratio of the pitch (11) between two textile threads (10) to the pitch (13) between the reinforcing elements (7) of said at least one carcass reinforcement layer (2) is greater than 10.

6. Tyre (1) according to one of Claims 1 to 5, **characterized in that** the ratio of the corrugation period (14) to the corrugation amplitude (12) is between 5 and 20.

7. Tyre (1) according to one of Claims 1 to 6, **characterized in that** the metal reinforcing elements of at least one layer of the carcass reinforcement are layered metal cords (31, 41, 51) of [L+M] or [L+M+N] construction usable as reinforcing element of a tyre carcass reinforcement, comprising a first layer C1 having L threads of diameter d₁ where L ranges from 1 to 4, surrounded by at least one intermediate layer C2 having M threads of diameter d₂ wound together in a helix with a pitch p₂ where M ranges from 3 to 12, said layer C2 being optionally surrounded by an outer layer C3 of N threads of diameter d₃ wound together in a helix with a pitch p₃, where N ranges from 8 to 20, and **in that** a sheath (34, 44, 54) consisting of a crosslinkable or crosslinked rubber composition based on at least one diene elastomer covers, in the [L+M] construction, said first layer C1 and, in the [L+M+N] construction, at least said layer C2.

8. Tyre according to Claim 7, **characterized in that** the diameter of the threads (32, 42, 52) of the first layer (C1) is between 0.15 and 0.5 mm and **in that** the diameter of the threads (33, 43, 53, 35) of the layers (C2, C3) is between 0.15 and 0.5 mm.

9. Tyre according to Claim 7 or 8, **characterized in that** the helix pitch with which said threads of the outer layer (C3) are wound is between 8 and 25 mm.

10. Tyre (1) according to one of Claims 2 to 10, **characterized in that** the diene elastomer is chosen from the group formed by polybutadienes, natural rubber, synthetic polyisoprenes, butadiene copolymers, isoprene copolymers and blends of these elastomers.

11. Tyre according to one of Claims 2 to 10, **characterized in that** the crosslinkable or crosslinked rubber composition based on at least one diene elastomer has, in the crosslinked state, a secant modulus in extension less than 20 MPa and preferably less than 12 MPa.

12. Tyre (1) according to one of the preceding claims, **characterized in that** the crown reinforcement (5) is formed from at least two working crown layers of inextensible reinforcing elements, which are crossed from one layer to the other making angles of between 10° and 45° with the circumferential direction.

13. Tyre (1) according to one of the preceding claims, **characterized in that** the crown reinforcement (5) also includes at least one layer of circumferential reinforcing elements.

14. Tyre according to one of the preceding claims, **characterized in that** the crown reinforcement (5) is supplemented, radially to the outside, by at least one supplementary protective ply consisting of elastic reinforcing elements oriented to the circumferential direction at an angle of between 10° and 45° and in the same sense as the angle made by the inextensible elements of the working ply that is radially adjacent thereto.

15. Tyre (1) according to one of the preceding claims, **characterized in that** the crown reinforcement (5) further includes a triangulation layer formed from metal reinforcing elements making angles of greater than 60° with the circumferential direction.

## Patentansprüche

1. Luftreifen (1) mit radialer Karkassenbewehrung, die aus mindestens einer Schicht (2) von metallischen Verstärkungselementen (7) besteht, wobei der Luftreifen eine Scheitelbewehrung (5) umfasst, die selbst radial mit einer Lauffläche (6) bedeckt ist, wobei die Lauffläche mit zwei Wulsten (3) über zwei Flanken vereinigt ist, **dadurch gekennzeichnet, dass** die metallischen Verstärkungselemente (7) mindestens einer Schicht der Karkassenbewehrung nicht bandagierte Kabel sind, die beim so genannten Permeabilitätstest einen Durchsatz, der geringer ist als 20 cm³/min, aufweisen, dass mindestens eine Schicht (2) der Karkassenbewehrung auf mindestens einer Fläche mit Textilfasern (10) versehen ist, die hauptsächlich gemäß einer Richtung orientiert sind, die zu jener der metallischen Verstärkungselemente (7) der mindestens einen Schicht (2) der Karkassenbewehrung parallel ist, und dass die Textilfasern um diese Hauptrichtung gewellt sind.

2. Luftreifen (1) nach Anspruch 1, **dadurch gekennzeichnet, dass** die metallischen Verstärkungselemente mindestens einer Schicht der Karkassenbewehrung Kabel (31, 41, 51) mit mindestens zwei Schichten sind und dass mindestens eine innere Schicht mit einer Schicht (34, 44, 54) umhüllt ist, die aus einer Polymerzusammensetzung wie einer vernetzbaren oder vernetzten Kautschukzusammensetzung, vorzugsweise auf der Basis mindestens eines Dienelastomers, besteht.

3. Luftreifen (1) nach Anspruch 1 oder 2, **dadurch gekennzeichnet, dass** die Kabel beim so genannten Permeabilitätstest einen Durchsatz aufweisen, der geringer als 10 cm³/min und vorzugsweise geringer als 2 cm³/min ist.

4. Luftreifen (1) nach einem der Ansprüche 1 bis 3, **dadurch gekennzeichnet, dass** das Verhältnis des Abstandes (11) zwischen zwei Textilfasern (10) zur Wellenamplitude (12) zwischen 0,5 und 1 liegt.

5. Luftreifen (1) nach einem der Ansprüche 1 bis 4, **dadurch gekennzeichnet, dass** das Verhältnis des Abstandes (11) zwischen zwei Textilfasern (10) zum Abstand (13) zwischen den Verstärkungselementen (7) der mindestens einen Schicht (2) der Karkassenbewehrung größer ist als 10.

6. Luftreifen (1) nach einem der Ansprüche 1 bis 5, **dadurch gekennzeichnet, dass** das Verhältnis der Wellenperiode (14) zur Wellenamplitude (12) zwischen 5 und 20 liegt.

7. Luftreifen (1) nach einem der Ansprüche 1 bis 6, **dadurch gekennzeichnet, dass** die metallischen Verstärkungselemente mindestens einer Schicht der Karkassenbewehrung Metallkabel (31, 41, 51) mit Schichten der Konstruktion [L+M] oder [L+M+N] sind, die als Verstärkungselement einer Luftreifenkarkassenbewehrung verwendbar sind, mit einer ersten Schicht C1 mit L Fasern mit dem Durchmesser d₁, wobei L von 1 bis 4 geht, die von mindestens einer Zwischenschicht C2 mit M Fasern mit dem Durchmesser d₂ umgeben ist, die gemäß einer Steigung p₂ gemeinsam schraubenförmig gewickelt sind, wobei M von 3 bis 12 geht, wobei die Schicht C2 eventuell von einer äußeren Schicht C3 mit N Fasern mit dem Durchmesser d₃ umgeben ist, die gemäß einer Steigung p₃ gemeinsam schraubenförmig gewickelt sind, wobei N von 8 bis 20 geht, und dass eine Ummantelung (34, 44, 54), die aus einer vernetzbaren oder vernetzten Kautschukzusammensetzung auf der Basis mindestens eines Dienelastomers besteht, in der Konstruktion [L+M] die erste Schicht C1 und in der Konstruktion [L+M+N] mindestens die Schicht C2 bedeckt.

8. Luftreifen nach Anspruch 7, **dadurch gekennzeichnet, dass** der Durchmesser der Fasern (32, 42, 52) der ersten Schicht (C1) zwischen 0,15 und 0,5 mm liegt und dass der Durchmesser der Fasern (33, 43, 53, 35) der Schichten (C2, C3) zwischen 0,15 und 0,5 mm liegt.

9. Luftreifen nach Anspruch 7 oder 8, **dadurch gekennzeichnet, dass** die Wicklungsschraubensteigung der Fasern der äußeren Schicht (C3) zwischen 8 und 25 mm liegt.

10. Luftreifen (1) nach einem der Ansprüche 2 bis 9, **dadurch gekennzeichnet, dass** das Dienelastomer aus der Gruppe ausgewählt ist, die aus den Polybutadienen, dem Naturkautschuk, den Synthesepolyisoprenen, den Butadiencopolymeren, den Isoprencopolymeren und den Gemischen dieser Elastomere besteht.

11. Luftreifen nach einem der Ansprüche 2 bis 10, **dadurch gekennzeichnet, dass** die vernetzbare oder vernetzte Kautschukzusammensetzung auf der Basis mindestens eines Dienelastomers im vernetzten Zustand einen Dehnungssekantenmodul aufweist, der geringer als 20 MPa und vorzugsweise geringer als 12 MPa ist.

12. Luftreifen (1) nach einem der vorangehenden Ansprüche, **dadurch gekennzeichnet, dass** die Scheitelbewehrung (5) aus mindestens zwei Arbeitsscheitelschichten von nicht dehnbaren Verstärkungselementen gebildet ist, die von einer Schicht zur anderen gekreuzt sind, indem sie mit der Umfangsrichtung Winkel einschließen, die zwischen 10° und 45° liegen.

13. Luftreifen (1) nach einem der vorangehenden Ansprüche, **dadurch gekennzeichnet, dass** die Scheitelbewehrung (5) außerdem mindestens eine Schicht von Umfangsverstärkungselementen umfasst.

14. Luftreifen nach einem der vorangehenden Ansprüche, **dadurch gekennzeichnet, dass** die Scheitelbewehrung (5) radial an der Außenseite mit mindestens einer zusätzlichen so genannten Schutzlage von sogenannten elastischen Verstärkungselementen vervollständigt ist, die in Bezug auf die Umfangsrichtung mit einem Winkel zwischen 10° und 45° und in derselben Richtung wie der durch die nicht dehnbaren Elemente der Arbeitslage gebildete Winkel, die dazu radial benachbart ist, orientiert sind.

15. Luftreifen (1) nach einem der vorangehenden Ansprüche, **dadurch gekennzeichnet, dass** die Scheitelbewehrung (5) außerdem eine Ausfachungsschicht umfasst, die aus metallischen Verstärkungselementen gebildet ist, die mit der Umfangsrichtung Winkel einschließen, die größer sind als 60°.
